# FASCICULE DE BREVET EUROPEEN

(11) **EP 4 263 295 B1**
(45) Date de publication et mention de la délivrance du brevet: **24.12.2025**
(21) Numéro de dépôt: 21820296.8
(22) Date de dépôt: 09.11.2021
(51) Int. Cl.: B60R 19/18

(54) **DISPOSITIF DE PARE-CHOCS A ABSORBEUR INTEGRE ET VEHICULE COMPORTANT UN TEL DISPOSITIF**
STOSSFÄNGERVORRICHTUNG MIT INTEGRIERTEM ABSORBER UND FAHRZEUG MIT DIESER VORRICHTUNG
BUMPER DEVICE WITH INTEGRATED ABSORBER, AND VEHICLE COMPRISING SAID DEVICE

(30) Priorité: 16.12.2020 FR 2013335
(43) Date de publication de la demande: 25.10.2023
(73) Titulaire: Stellantis Auto SAS, 78300 Poissy (FR)
(72) Inventeur: IDALI, Jihane, SAFI, 46000 (MA); RIVIERE, Claude, 78460 CHEVREUSE (FR)
(74) Mandataire: BCIP
(86) Numéro de dépôt international: PCT/FR2021/051979
(87) Numéro de publication internationale: WO 2022/129719

(56) Documents cités:
- WO-A1-01/92064
- DE-A1- 10 260 387
- FR-A1- 2 959 465

## Description

La présente invention revendique la priorité de la demande française 2013335 déposée le 16 décembre 2020.

L'invention concerne un pare-chocs arrière de véhicule et un véhicule équipé d'un tel pare-chocs.

Il est connu d'installer une peau de pare-chocs à l'arrière d'un véhicule, recouvrant une poutre arrière de pare-chocs s'étendant transversalement au véhicule. Un ou plusieurs éléments de rigidification, communément appelés armature de peau de pare-chocs, sont parfois fixés derrière la peau de pare-chocs. Le rôle de cette armature est de donner de la raideur à la peau de pare-chocs. Généralement, un espace existe entre cette armature ou la peau de pare-chocs, et la poutre arrière de pare-chocs, car la courbure de la peau de pare-chocs ou de l'armature est plus importante que celle de la poutre de pare-chocs.

Le document EP1633603 décrit un véhicule comportant une poutre de pare-chocs disposée transversalement au véhicule, et une peau de pare-chocs recouvrant ladite poutre. Un élément d'absorption est disposé entre la poutre et la peau de pare-chocs, fixé à ladite poutre, réduire les blessures en cas de choc contre un piéton. Il comporte

L'inconvénient d'une telle solution est qu'elle nécessite l'ajout d'une pièce complémentaire, complexifiant le montage, le coût et ajoutant de la masse du véhicule. De plus, il n'offre qu'un seul type d'absorption

L'objectif de l'invention est de remédier à ces inconvénients. En particulier, un des buts de l'invention est de proposer un système de pare-chocs pour véhicule, notamment pour l'arrière du véhicule, comportant un dispositif comblant le jeu entre une poutre de pare-chocs et une peau de pare-chocs, à moindre coût, simple à installer et limitant la masse du véhicule.

Ce but est atteint selon l'invention, grâce à un dispositif de pare-chocs de véhicule selon la revendication 1.

Ainsi avantageusement, le nombre de pièces à installer est réduit, le moyen d'absorption étant un élément compris dans la peau de pare-chocs. Il n'est donc pas nécessaire s'installer une pièce complémentaire formant un moyen d'absorption en plus de la peau de pare-chocs, avant d'installer la peau de pare-chocs. Le montage du véhicule est simplifié, tout en conservant la fonction d'absorption entre la poutre et la peau de pare-chocs pour limiter les blessures et/ou les dégradations du véhicule en cas de choc contre le pare-chocs.

Selon l'invention, le moyen d'absorption forme un plot en saillie s'étendant du côté de la face intérieure, le plot comporte une partie de contact à son extrémité opposée à la face intérieure et une partie intermédiaire entre la face intérieure et la partie de contact, la partie intermédiaire étant plus rigide que la partie de contact vis-à-vis des efforts dirigés vers la face intérieure parallèlement à la direction de saillie du plot.

Ainsi avantageusement, en cas de choc à très faible vitesse, par exemple inférieure à 4 km/h, le moyen d'absorption permet d'absorber l'énergie du choc qui est faible et ainsi éviter les dégradations de la face extérieure, comme par exemple de la peinture disposée sur cette face extérieure, tout en permettant une absorption de l'énergie d'un choc à une vitesse faible mais plus élevée que la très faible vitesse, par exemple à une vitesse comprise entre 4 km/h et 16km/h, afin d'absorber cette énergie du choc et mieux maîtriser les déformations de la peau de pare-chocs, évitant ainsi des dégâts sur la poutre ainsi que sur les éléments de carrosserie disposés autour de la peau de pare-chocs. Cette absorption permet aussi de réduire les dégâts sur la peau de pare-chocs.

Selon l'invention, la partie intermédiaire forme un corps creux comportant une ouverture opposée à la face intérieure, du côté de la partie de contact, la partie de contact s'étendant en vis-à-vis de cette ouverture, d'un côté à l'autre de ladite ouverture, en saillie par rapport à cette ouverture, la partie de contact est une paroi comportant une zone convexe en direction opposée à la face intérieure et s'étendant d'un bord à l'autre de l'ouverture, de préférence comportant deux zone convexes.

Dans un autre mode de réalisation de l'invention, la peau de pare-chocs comporte plusieurs plots en partie milieu selon une direction transversale correspondant à la direction transversale du véhicule lorsque le dispositif est installé sur ledit véhicule.

Dans un autre mode de réalisation de l'invention, le moyen d'absorption est disposé transversalement en partie milieu de la peau de pare-chocs, et ladite peau de pare-chocs comporte deux zones renforcées par des nervures sur sa face intérieure, disposées transversalement chacune de part et d'autre de la partie milieu comportant le moyen d'absorption, la direction transversale correspondant à la direction transversale du véhicule lorsque le dispositif est installé sur ledit véhicule.

Dans un autre mode de réalisation de l'invention, le dispositif de pare-chocs comporte une jupe inférieure recouvrant la face extérieure de la peau de pare-chocs au moins dans les parties de ladite peau comportant le moyen d'absorption et/ou les deux zones renforcées.

Ainsi avantageusement, la jupe recouvrant la partie de la peau de pare-chocs comportant le moyen d'absorption et/ou les deux zones renforcées, celles-ci ne sont pas visibles depuis l'extérieur du véhicule.

L'invention porte aussi sur un véhicule comportant une poutre de pare-chocs arrière et un dispositif de pare-chocs tel que décrit précédemment, de préférence à l'arrière dudit véhicule.

Dans un mode de réalisation préféré de l'invention portant sur le véhicule, le moyen d'absorption et/ou les deux zones renforcées sont en vis-à-vis de la poutre de pare-chocs suivant la direction longitudinale du véhicule.

L'invention sera mieux comprise à la lecture de la description qui va suivre, donnée uniquement à titre d'exemple et faite en se référant aux dessins annexés, sur lesquels :
[Fig.1] représente une vue arrière d'un véhicule comportant un dispositif de pare-chocs suivant l'invention à l'arrière.
[Fig.2] représente une vue du dispositif de pare-chocs vue de sa face intérieure orientée vers l'intérieur du véhicule.
[Fig.3] représente une vue en perspective d'un moyen de d'absorption équipant le dispositif de pare-chocs.
[Fig.4] représente une vue en coupe suivant un plan longitudinal et transversal au véhicule du moyen de d'absorption.
[Fig.5] représente une vue en perspective du dispositif de pare-chocs installé sur un véhicule au niveau d'une zone renforcée.

Les dessins sont des représentations schématiques pour faciliter la compréhension de l'invention. Les composants ne sont pas forcément représentés à l'échelle. Les mêmes références correspondent aux mêmes composants d'une figure à l'autre.

Les dessins sont des représentations schématiques pour faciliter la compréhension de l'invention. Les composants ne sont pas forcément représentés à l'échelle. Les mêmes références correspondent aux mêmes composants d'une figure à l'autre. L'axe X représente la direction longitudinale du véhicule, l'axe Y la direction transversale et l'axe Z la direction verticale. Les directions avant, arrière, haut, bas sont prises dans le référentiel du véhicule.

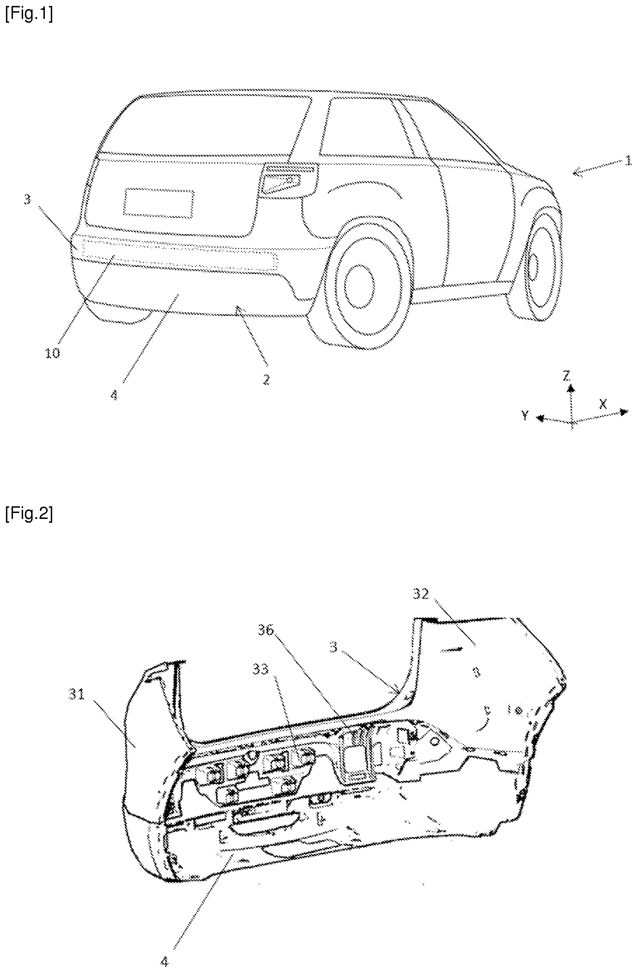

La figure 1 représente un véhicule 1 comportant un dispositif de pare-chocs 2 à l'arrière. Le dispositif de pare-chocs 2 comporte une peau 3 de pare-chocs disposée devant une poutre de pare-chocs 10, représentée en pointillés. Autrement dit, la poutre 10 est disposée entre la peau 3 et la structure du véhicule 1. La poutre 10 s'étendant transversalement au véhicule 1, c'est-à-dire parallèlement à l'axe transversal Y du véhicule 1. La partie de la peau 3 de pare-chocs en vis-à-vis de la poutre de pare-chocs 10 est destinée à être en contact en premier en cas de choc, par exemple en cas de marche arrière du véhicule contre un mur ou un poteau.

Comme illustré en figure 2, la peau 3 de pare-chocs comporte une face 31 extérieure et une face intérieure 32. La face intérieure 32 est disposé en vis-à-vis de la structure du véhicule 1, et notamment en vis de la poutre 10. Autrement dit, la face intérieure 32 est située du côté de l'habitacle du véhicule 1. La face extérieure 31 est située à l'opposé de la face intérieure 32, c'est-à-dire orientée vers l'extérieur du véhicule 1. Un moyen d'absorption 33 est disposé du côté de la face intérieure de la peau, en vis-à-vis de la poutre 10 de pare-chocs de sorte à s'appuyer contre ladite poutre 10 lorsque le véhicule 1 reçoit un choc sur la face extérieure 31 de la peau 3 de pare-chocs, dirigé globalement dans la direction longitudinal X du véhicule 1. Le moyen d'absorption 33 est issu de matière avec la peau 3 de pare-chocs. C'est-à-dire qu'il est formé d'un bloc avec le peau 3 de pare-chocs.

Comme illustré en figures 2 à 4, le moyen d'absorption 33 a une forme de plot 33 en saillie s'étendant du côté de la face intérieure 32, donc s'étendant vers la poutre 10 de pare-chocs. Le plot 33 comporte une partie de contact 331 à son extrémité opposée à la face intérieure 32 et une partie intermédiaire 332 entre la face intérieure 32 et la partie de contact 331. La partie intermédiaire 332 est par ailleurs plus rigide que la partie de contact 331 vis-à-vis des efforts dirigés vers la face intérieure 32 parallèle à la direction de saillie du plot 33, c'est-à-dire dans la direction longitudinale X. La partie de contact 331 est dimensionné de sorte à absorber des chocs contre un mur ou un poteau jusqu'à une première vitesse limite du véhicule 1, par exemple une vitesse de 8 km/h ou encore de 4 km/h. Lorsque la vitesse du véhicule 1 est entre cette première vitesse limite et une deuxième vitesse limite, la partie de contact 331 est écrasée et c'est la partie intermédiaire 332 qui transmet les efforts sur la poutre 10. La deuxième vitesse limite est par exemple de 20 km/h ou encore de 16 km/h. Elle peut correspondre par exemple à la vitesse utilisée pour faire un test de choc dit choc réparabilité. D'autres vitesses limites peuvent être défini en fonction de la configuration du véhicule 1 choisi. La rigidité supérieure de la partie intermédiaire 332 permet d'absorber une plus grande quantité d'énergie en cas de choc que la partie d'extrémité 331.

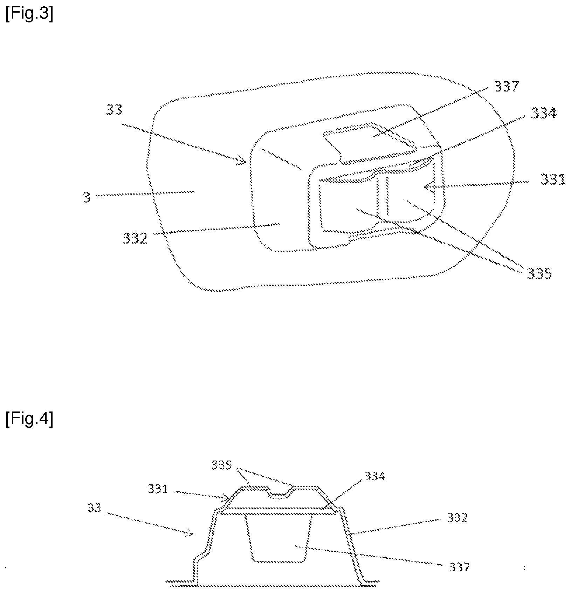

Selon l'invention illustré en figures 3 et 4, la partie intermédiaire 332 forme un corps creux comportant une ouverture 334 opposée à la face intérieure, du côté de la partie de contact. La partie de contact 331 s'étend en vis-à-vis de cette ouverture 334, d'un côté à l'autre de ladite ouverture 334, en saillie par rapport à cette ouverture 334. Dans la représentation des figures 3 et 4, la partie intermédiaire 332 est formée par quatre parois latérales, donnant une section rectangulaire à ladite partie intermédiaire 332 dans un plan YZ transversal et vertical au véhicule 1. C'est-à-dire que la partie intermédiaire 332 a une forme globale cylindrique de section rectangulaire, ouverte à ces deux extrémités, et l'ouverture 334 est disposée à l'extrémité située à l'opposé de la face intérieure 32, c'est-à-dire la plus proche de la poutre 10. La partie de contact 331 s'étend d'une première paroi latérale de la partie intermédiaire 332 jusqu'à une deuxième paroi latérale de la partie intermédiaire 332 opposée à la première paroi latérale, depuis le bord de chacun de ces parois latérales formant une partie du bord de l'ouverture 334.

Par exemple, la partie de contact 331 est sous la forme d'une paroi de contact 331 qui comporte une zone convexe 335 en direction opposée à la face intérieure 32 et s'étendant d'un bord à l'autre de l'ouverture 334. Dans le mode de réalisation des figures 3 et 4, cette paroi de contact 331 comportant deux zone convexes 335. Ces zones convexes 335 confèrent une souplesse à la paroi de contact 331, et viennent au contact de la poutre 10 en cas de choc arrière. En vue en coupe suivant un plan XZ vertical et longitudinal au véhicule 1, comme illustré en figure 4, la partie de contact a une section en « m » allongé, dont les deux extrémités des branches latérales du « m » sont reliées au bord de l'ouverture 334.

Comme illustré en figure 2, la peau de pare-chocs peut comporter plusieurs plots en partie milieu de la peau 3 selon la direction transversale Y. Cette partie milieu s'étend par exemple sur 50 % de la largeur du dispositif de pare-chocs 2, c'est-à-dire suivant sa dimension dans la direction transversale Y du véhicule 1, de part et d'autre du plan médian XZ longitudinal et vertical au véhicule et au dispositif 2 de pare-chocs.

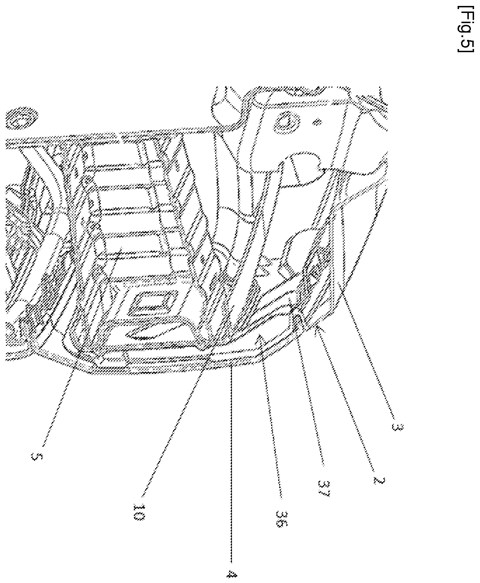

Comme illustré dans le mode de réalisation des figure 2, le moyen d'absorption 33 est disposé transversalement en partie milieu de la peau 3 de pare-chocs, c'est-à-dire que plusieurs plots sont disposés éloignés l'un de l'autre dans la direction transversale Y et dans la partie milieu de la peau 3, et ladite peau 3 de pare-chocs comporte deux zones renforcées 36 par des nervures 37 sur sa face intérieure 32. Les deux zones renforcées 36 sont disposées chacune de part et d'autre de la partie milieu de la peau 3 comportant le moyen d'absorption, suivant la direction transversale Y. Comme illustré en figure 5, les nervures 37 s'étendent suivant une direction verticale Z, en vis-à-vis de la poutre de pare-chocs 10 et de part et d'autre de celle-ci. Ces nervures 37 permettent de réduire la déformation de la peau de pare-chocs 3 en cas de choc à faible vitesse contre la peau de pare-chocs 3 au niveau de ces zones renforcées 36, et donc de réduire les risques de dégradation des éléments de carrosserie du véhicule 1 situés autour de ladite peau de pare-chocs 3 du fait de sa déformation. Dans la figure 5, la poutre 10 est fixé à la structure du véhicule 1 par deux boîtes d'absorption 5, connues sous le nom de crashbox, disposées à chaque extrémité de la poutre 10. En cas de choc, la boîte d'absorption 5 s'écrase afin d'absorber l'énergie du choc, par exemple pour des chocs dit de type réparabilité. Les deux zones renforcées 36 sont disposées par exemple chacune en vis-à-vis de l'une des boîtes d'absorption 5 dans la direction longitudinale X du véhicule 1.

Dans les figures 1 à 5, le dispositif de pare-chocs 2 comporte une jupe inférieure 4 qui recouvre la face extérieure 31 de la peau 3 de pare-chocs au moins dans les parties de ladite peau 3 comporte le moyen d'absorption 33, ainsi que qu'au niveau des deux zones renforcées 36 lorsque celles-ci sont présentes.

La partie de contact 331 du plot 33 est espacée de quelques millimètres, ou encore de quelques centimètres de la poutre 10. En variante, la partie de contact 331 du plot 33 est en contact avec la poutre 10.

La partie intermédiaire 332 est déformable. Elle comporte par exemple des zones à déformation programmée, comme par exemple des zones de plus faible épaisseur, ou encore une forme permettant son écrasement de type accordéon. Elle peut comporter en outre des lumières 337, comme illustré en figure 3 et 4, sur certaines de ces parois latérales de manière à ajuster sa raideur. D'autres formes à la portée de l'homme du métier sont applicables.

## Revendications

1. Dispositif de pare-chocs (2) de véhicule (1) comportant une peau de pare-chocs (3) comportant une face extérieure (31) et une face intérieure (32), un moyen d'absorption (33) disposé du côté de la face intérieure (32) de la peau (3) et destiné à être en vis-à-vis d'une poutre (10) de pare-chocs lorsque le dispositif de pare-chocs (2) est installé sur un véhicule (1), de sorte à s'appuyer contre ladite poutre (10) en cas de chocs contre la face extérieure de la peau de pare-chocs (3), le moyen d'absorption (33) étant issu de matière avec la peau (3) de pare-chocs, le moyen d'absorption (33) formant un plot (33) en saillie s'étendant du côté de la face intérieure (32), le plot (33) comportant une partie de contact (331) à son extrémité opposée à la face intérieure (32) et une partie intermédiaire (332) entre la face intérieure (32) et la partie de contact (331), la partie intermédiaire (332) étant plus rigide que la partie de contact (331) vis-à-vis des efforts dirigés vers la face intérieure parallèlement à la direction de saillie du plot (33), la partie intermédiaire (332) formant un corps creux comportant une ouverture (334) opposée à la face intérieure (32), du côté de la partie de contact (331), la partie de contact (331) s'étendant en vis-à-vis de cette ouverture (334), d'un côté à l'autre de ladite ouverture (334), en saillie par rapport à cette ouverture (334), **caractérisé en ce que** la partie de contact (331) est une paroi comportant une zone convexe (335) en direction opposée à la face intérieure et s'étendant d'un bord à l'autre de l'ouverture (334), de préférence comportant deux zone convexes (335).

2. Dispositif (2) de pare-chocs suivant la revendication 1, dont la peau (3) de pare-chocs comporte plusieurs plots (33) en partie milieu selon une direction transversale correspondant à la direction transversale du véhicule (1) lorsque le dispositif (2) est installé sur ledit véhicule (1).

3. Dispositif (2) de pare-chocs suivant l'une des revendications précédentes, dont le moyen d'absorption (33) est disposé transversalement en partie milieu de la peau (3) de pare-chocs, et ladite peau (3) de pare-chocs comporte deux zones renforcées (36) par des nervures (37) sur sa face intérieure, disposées transversalement chacune de part et d'autre de la partie milieu comportant le moyen d'absorption (33), la direction transversale correspondant à la direction transversale du véhicule (1) lorsque le dispositif (2) est installé sur ledit véhicule (1).

4. Dispositif (2) de pare-chocs suivant l'une des revendications précédentes, comportant une jupe inférieure (4) recouvrant la face extérieure (31) de la peau (3) de pare-chocs au moins dans les parties de ladite peau (3) comportant le moyen d'absorption (33) et/ou les deux zones renforcées (36).

5. Véhicule (1) comportant une poutre (10) de pare-chocs arrière et un dispositif (2) de pare-chocs suivant l'une des revendications précédentes, de préférence à l'arrière dudit véhicule (1).

6. Véhicule (1) suivant la revendication précédente, dont le moyen d'absorption (33) et/ou les deux zones renforcées (36) sont en vis-à-vis de la poutre (10) de pare-chocs suivant la direction longitudinale (X) du véhicule (1).

## Patentansprüche

1. Stoßfängervorrichtung (2) für ein Fahrzeug (1) mit einer Stoßfängerhaut (3), die eine Außenseite (31) und eine Innenseite (32) aufweist, mit einem Absorptionsmittel (33), das auf der Seite der Innenseite (32) der Haut (3) angeordnet ist und dazu bestimmt ist, einem Stoßfängerbalken (10) gegenüberzuliegen, wenn die Stoßfängervorrichtung (2) an einem Fahrzeug (1) angebracht ist, sodass sie sich im Falle eines Stoßes gegen die Außenseite der Stoßfängerhaut an dem Balken (10) abstützt (3), wobei das Absorptionsmittel (33) aus einem Material mit der 10-Stoßfänger-Haut (3) besteht, wobei das Absorptionsmittel (33) einen vorstehenden Klotz (33) bildet, der sich auf der Seite der Innenseite (32) erstreckt, wobei der Klotz (33) einen Kontaktabschnitt (331) an seinem der Innenseite (32) gegenüberliegenden Ende und einen Zwischenabschnitt (332) zwischen der Innenseite (32) und dem Kontaktabschnitt (331) aufweist, wobei der Zwischenabschnitt (332) starrer ist Kontakt (331) gegen die parallel zur Vorsprungsrichtung des Klotzes (33) zur Innenseite gerichteten Kräfte, wobei der Zwischenteil (332) einen Hohlkörper bildet, der auf der Seite des Kontaktabschnitts (331) eine der Innenseite (32) gegenüberliegende Öffnung (334) aufweist, wobei sich der Kontaktabschnitt (331) gegenüber dieser Öffnung (334) von einer Seite der Öffnung (334) zur anderen erstreckt und in Bezug auf diese Öffnung vorsteht (334), **dadurch gekennzeichnet, dass** der Kontaktabschnitt (331) eine Wand ist, die einen konvexen Bereich (335) aufweist, der der Innenseite entgegengesetzt ist und sich von einem Rand der Öffnung (334) zum anderen erstreckt, vorzugsweise mit zwei konvexen Bereichen (335).

2. Stoßfängervorrichtung (2) nach Anspruch 1, bei der die Stoßfängerhaut (3) eine Vielzahl von Zapfen (33) aufweist, die in Querrichtung entsprechend der Querrichtung des Fahrzeugs (1) teilweise mittig angeordnet sind, wenn die Vorrichtung (2) an dem Fahrzeug (1) angebracht ist.

3. Stoßfängervorrichtung (2) nach einem der vorhergehenden Ansprüche, bei der das Absorptionsmittel (33) quer in einem mittleren Teil der Stoßfängerhaut (3) angeordnet ist und die Stoßfängerhaut (3) zwei Bereiche aufweist, die mit Rippen (37) an ihrer Innenseite verstärkt sind, die quer zu beiden Seiten des mittleren Teils angeordnet sind, der das Absorptionsmittel (33) aufweist, wobei die Querrichtung der Querrichtung des Fahrzeugs (1) entspricht, wenn die Vorrichtung (2) an dem Fahrzeug (1) angebracht ist.

4. (2) mit einer unteren Schürze (4), die die Außenfläche (31) der Stoßfänger-Haut (3) zumindest in den Teilen der Haut (3) bedeckt, die das Absorptionsmittel (33) und/oder die beiden verstärkten Bereiche (36) aufweisen.

5. Fahrzeug (1) mit einem hinteren Stoßfängerbalken (10) und einer Stoßfängervorrichtung (2) nach einem der vorhergehenden Ansprüche, vorzugsweise an der Rückseite des Fahrzeugs (1).

6. Fahrzeug (1) nach dem vorhergehenden Anspruch, bei dem das Absorptionsmittel (33) und/oder die beiden verstärkten Bereiche (36) dem Stoßfängerträger (10) in Längsrichtung (X) des Fahrzeugs (1) gegenüberliegen.

## Claims

1. Vehicle bumper device (2) (1) comprising a bumper skin (3) comprising an outer face (31) and an inner face (32), an absorption means (33) arranged on the side of the inner face (32) of the skin (3) and intended to face a bumper beam (10) when the bumper device (2) is installed on a vehicle (1), so as to bear against said beam (10) in the event of impacts against the outer face of the bumper skin (3), the absorption means (33) being made in one piece with the bumper skin (3), the absorption means (33) forming a protruding stud (33) extending on the side of the inner face (32), the stud (33) comprising a contact part (331) at its end opposite the inner face (32) and an intermediate part (332) between the inner face (32) and the contact part (331), the intermediate part (332) being stiffer than the contact part (331) with respect to forces directed towards the inner face parallel to the projection management of the stud (33), the intermediate part (332) forming a hollow body comprising an opening (334) opposite the inner face (32), on the side of the contact part (331), the contact part (331) extending opposite this opening (334), from one side to the other of said opening (334), projecting by report at this opening (334) wherein the contact part (331) is a wall comprising a convex zone (335) on the opposite management to the inner face and extending from one edge to the other of the opening (334), preferably comprising two convex zones (335).

2. A bumper device (2) according to claim 1, the bumper skin (3) of which comprises several studs (33) in the middle part according to a transverse management corresponding to the transverse management of the vehicle (1) when the device (2) is installed on the said vehicle (1).

3. Bumper device (2) according to one of the previous claims, the absorption means (33) of which is disposed transversely in the middle part of the bumper skin (3), and the said bumper skin (3) comprises two zones reinforced (36) by ribs (37) on its inner face, each disposed transversely on either side of the middle part comprising the absorption means (33), the transverse management corresponding to the transverse management of the vehicle (1) when the device (2) is installed on the said vehicle (1).

4. Bumper device (2) according to one of the previous claims, comprising a lower skirt (4) covering the outer face (31) of the bumper skin (3) at least in the parts of said skin (3) comprising the absorption means (33) and/or the two reinforced zones (36).

5. Vehicle (1) comprising a rear bumper beam (10) and a bumper device (2) according to one of the previous claims, preferably in the rear of said vehicle (1).

6. Vehicle (1) according to the previous claim, in which the absorption means (33) and/or the two reinforced zones (36) face the bumper beam (10) along the longitudinal management (X) of the vehicle (1).
